## Europäisches Patentamt

## European Patent Office

## Office européen des brevets

(11) Veröffentlichungsnummer: **0 189 955**
**B1**

(12) # EUROPÄISCHE PATENTSCHRIFT

(45) Veröffentlichungstag der Patentschrift:
03.05.89

(51) Int. Cl.⁴: **E 21 F 13/02**

(21) Anmeldenummer: **86200066.8**

(22) Anmeldetag: **15.01.86**

(54) **Gleisloses knickgelenktes Untertagefahrzeug mit Elektromotorantrieb.**

(30) Priorität: **31.01.85 DE 3503225**

(43) Veröffentlichungstag der Anmeldung:
**06.08.86 Patentblatt 86/32**

(45) Bekanntmachung des Hinweises auf die Patenterteilung:
**03.05.89 Patentblatt 89/18**

(84) Benannte Vertragsstaaten:
**AT CH DE FR GB IT LI SE**

(56) Entgegenhaltungen:
**EP-A- 0 088 868**
**DE-A- 2 517 836**
**FR-A- 2 508 883**

**ENGINEERING & MINING JOURNAL, Band 182, Nr. 8, August 1981, Seiten 66-71, New York, US; E.N. DURUSSEL et al: "Development of electrical equipment at Sherritt Gordons's Fox Mine"**
**"CIM-Reporter", Vol.7, Nr.2, 04.05.1981**

(73) Patentinhaber: **METALLGESELLSCHAFT AG, Reuterweg 14 Postfach 3724, D-6000 Frankfurt/M.1 (DE)**
Patentinhaber: **Maschinenfabrik Hermann Paus Gmbh, Siemenstrasse 1, D-4448 Emsbüren (DE)**
Patentinhaber: **Paul Vahle GmbH & Co. KG, Westicker Strasse 52, D-4708 Kamen (DE)**

(72) Erfinder: **Hillmann, Willi, Ostkamp 8, D-4708 Kamen (DE)**
Erfinder: **Paus, Hermann, Heideweg 5, D-4448 Emsbüren (DE)**
Erfinder: **Drews, Eberhard, Am Gradeberg 13, D-5940 Lennestadt 17 (DE)**

(74) Vertreter: **Rieger, Harald, Dr., Reuterweg 14, D-6000 Frankfurt am Main (DE)**

## Beschreibung

Die Erfindung betrifft ein gleisloses, knickgelenktes Untertagefahrzeug mit Elektromotorantrieb des Zugteils, dessen Energiezufuhr über eine Schleifleitung und eine daran fahrbare Stromabnehmervorrichtung sowie über eine an letztere elektrisch und kraftschlüssig angeschlossene und gegen Rückstellkraft von einer Trommel abziehbare Verbindungsleitung erfolgt.

Es ist bekannt, das im Erz- oder Salzbergbau gewonnene Haufwerk überwiegend mit selbstfahrenden, gleislosen Fahrzeugen, in der Regel insbesondere knickgelenkten Muldenkippern, von den Abbauräumen zutage zu fördern. Hierfür werden üblicherweise durch Dieselmotoren angetriebene Fahrzeuge eingesetzt. Aus der Verwendung von Dieselmotoren zum Antrieb der Förderfahrzeuge resultiert eine hohe Schadstoffbelastung der untertägigen Wetter. Es ist daher bekannt, schienengebundene Untertagefahrzeuge einzusetzen, die über einen entlang der Förderstrecke geführten Fahrdraht mit elektrischer Energie versorgt werden oder über auswechselbare Batterien.

Aus «CIM-Reporter», Vol. 7, Nr. 2, 4. Mai 1981 sowie auch aus «Engineering Mining Journal» 182, August 1981, Seiten 66-71, ist ferner ein knickgelenktes Untertagefahrzeug mit Elektromotor bekannt, das über ein Versorgungssystem, bestehend aus Schleifleitung, Stromabnehmer und Kabelwickeltrommel betrieben wird. Das Kabel ist selbstspannend und das Fahrzeug ist in Längs- und Querrichtung zur Schleifleitung verfahrbar. Die Kabeltrommel ist eine wildwickelnde, um eine horizontale Achse drehbare Trommel und vor dem Fahrzeug angebracht.

Des weiteren ist aus der DE-B-2 517 836 eine Vorrichtung bekannt zur Übertragung elektrischer Energie mittels eines Kabels von einer ortsfesten Anlage auf ein z.B. gleisloses Fahrzeug, wobei dieses eine aufmontierte Kabeltrommeleinheit mit vertikaler Drehachse und zwei übereinander konzentrisch gelagerten Trommeln aufweist. Nach einer Ausführungsform steht die Trommeleinheit mit einer fahrbaren Stromabnehmervorrichtung in Verbindung, die sich an einem Stromschienensystem entlang bewegt. Das stromzuführende Kabel, wie Flachkabel und eine Leine, werden mit untereinander gegenläufigen Wicklungssinn auf die jeweilige Trommel aufgewickelt. Die beiden gegensinnig drehenden Trommeln sollen bei Querfahrten des Fahrzeugs unter dem Schienensystem hindurch eine schädliche Verdrehung und einen Konflikt von Kabel und Leine verhindern. Das vorbekannte Fahrzeug weist mehrere Nachteile auf und erfüllt nicht die gewünschten Bedingungen einer praktisch freien Beweglichkeit bzw. Drehbarkeit in jeder Position unter dem Fahrdrahtsystem in einem Winkelbereich von 0 bis 360°. Weil die Speiseleitung selbst nicht beliebig verdrehbar ist, kommt es leicht zu mechanischen Zugspannungen, Bruch und elektrischem Durchschlag. Ferner hängt die Speiseleitung meist durch und erleidet Beschädigung durch Schleifen über den Boden oder Scheuern am Fahrzeug.

Nachteile weiterer bekannter Fahrzeuge der vorgenannten Art sind in deren geringem Aktionsradius, in zu hohem Fahrzeugleergewicht bei Batterie- und Fahrdrahtbetrieb, in der Stoßempfindlichkeit von Gleichrichteranlagen und in der Empfindlichkeit von Gleichstromantrieben mit Kollektor gegenüber Feuchtigkeit und aggressiven Gasen und Flüssigkeiten zu sehen.

Der Erfindung liegt die Aufgabe zugrunde, ein Fahrzeug der vorgenannten Art bereitzustellen, das in einer beliebigen freien Fahrbahn innerhalb der Reichweite des Systems operieren kann, ohne daß dadurch eine schädliche Verdrillung der flexiblen Verbindungsleitung entsteht und ohne daß der Fahrzeuglenker einen bestimmten Fahrzyklus einhalten muss.

Die Aufgabe wird gelöst, indem ein gleisloses, knickgelenktes Untertagefahrzeug mit Elektromotorantrieb des Zugteils, dessen Energiezufuhr über eine Schleifleitung und eine daran fahrbare Stromabnehmervorrichtung sowie über eine an letztere elektrisch und kraftschlüssig angeschlossene und gegen Rückstellkraft von einer Trommel abziehbare Verbindungsleitung erfolgt, gemäß der Erfindung mit einer Kombination folgender Merkmale ausgestaltet wird:

a) die Verbindungsleitung (Speiseleitung) ist über einen um eine vertikale Achse drehbaren Schleifringkörper an die Stromabnehmervorrichtung angeschlossen;

b) eine mit Hydraulikmotor angetriebene, spiralig wickelnde Leitungstrommel ist um eine vertikale Achse drehbar auf dem Zugteilangebracht, wobei die Achse mit einem Schleifringkörper ausgerüstet ist;

c) ein hydraulisch verschwenkbarer Führungsarm ist koaxial zur Leitungstrommel angeordnet;

d) ein hydrostatisches Axialkolbengetriebe ist mit einem Drehstrommotor gekoppelt.

Mit der Erfindung ist eine anhaltende Versorgung des Förderfahrzeugs mit elektrischer Energie aus dem Netz (Stromschienensystem) sowohl während der Längsfahrt, d.h. während der Fahrt durch z.B. die Förderstrecke, als auch während der Querfahrt, d.h. während des Befahrens des am Kopfende der z.B. Förderstrecke befindlichen z.B. freien Raumes, unter Erhaltung des gewünschten Bewegungsspielraumes des gleislosen Förderfahrzeugs unter sicherem Vermeiden jeglicher Verdrillung der Verbindungsleitung möglich.

Nach einer weiteren Ausführungsform ist das erfindungsgemäße Untertagefahrzeug an der Stromabnehmervorrichtung mit einem Trennschalter für die lösbare elektrische Verbindungsleitung (Speiseleitung) ausgerüstet. Diese Einrichtung erlaubt die Abtrennung des Fahrzeugs einerseits vom fest installierten elektrischen Versorgungssystem im Falle von z.B. Auswechseln des Fahrzeugs, Gefahr oder Unfällen. Andererseits ist es über eine weitere Trennvorrichtung am Antriebsteil möglich, eine fahrbare elektrische Energiequelle mit dem Elektro-Untertagefahrzeug elektrisch zu verbinden. Eine mechanische Kupplung wird zusätzlich vorgenommen. Auf diese Weise kann das Umsetzen des Untertage-Elektrofahrzeugs in der Grube sowie nach übertage mit Hilfe eines Generators erfolgen, der auf einem separaten Fahrzeug, wie Anhänger, montiert ist. Die Verbindungsleitung des Elektrofahrzeugs ist zweckmäßig über eine Steckdose mit dem Generator verbunden. Der mobile Generator kann, wenn er nicht benötigt wird, übertage abgestellt werden und bei Bedarf schnell zu den Untertage-Einsatzstellen (Elektrolader, Elektro-Dumper) gefahren werden.

Das Untertagefahrzeug der Erfindung ist ein allradgetriebenes knickgelenktes Fahrzeug mit pendelndem Fahrzeugrahmen. Der Antrieb des Fahrzeugs erfolgt im allgemeinen über einen Elektromotor mit einer Leistung von z.B. 200 kw bei 1500 U/min und einer Spannung von 950 V. Für den Fahrantrieb sind dem Motor ein Verteilergetriebe und mehrere hydrostatische Axialkolbengetriebe nachgeschaltet, welche die hydrostatischen Antriebsmotoren für alle vier Räder beaufschlagen. Die Arbeits- und Lenkhydraulik sowie der hydraulische Antrieb von Leitungstrommel und Führungsarm werden ebenfalls vom Elektromotor her über hydrostatische Axialkolbengetriebe versorgt.

Bei dem Untertagefahrzeug der Erfindung ist die Verbindungsleitung von der spiralig wickelnden und sich um eine vertikale Achse drehenden Leitungstrommel beim Wegfahren des Fahrzeugs abziehbar unter Vermeidung von Bodenkontakt. Beim Zurückfahren des Fahrzeugs in Richtung auf die Schleifleitung erfolgt selbsttätiger Rückzug der Verbindungsleitung.

Der auf die Verbindungsleitung einwirkende Leitungszug ist im übrigen in Abhängigkeit von der Kabellänge solchermaßen variabel, daß die abgezogene Verbindungsleitung sich bodenfrei zwischen dem Stromabnehmerwagen und dem Fahrzeug erstreckt. Das läßt sich beispielsweise durch stetige Drehmomentänderung an der Leitungstrommel bewirken, beispielsweise durch druckabhängige Steuerung des Hydromotors der Leitungstrommel in Abhängigkeit von der Kabellänge.

Für die Längsfahrt des Fahrzeugs, also für die Fahrt des Fahrzeugs entlang der Schleifleitung, ist bei auf die Leitungstrommel aufgespulter Verbindungsleitung der Leitungszug so eingestellt, daß die Verbindungsleitung den entlang der Schleifleitung verfahrbaren Stromabnehmerwagen beim Verfahren des Fahrzeugs mitnimmt.

Die um eine vertikale Achse drehbare Leitungstrommel ist zweckmäßig unmittelbar oberhalb des Zugteils des Fahrzeugs angeordnet. Diese Anordnung ermöglicht eine geringe Bauhöhe des Fahrzeugs und berücksichtigt auch die Bauhöhe insbesondere der Förderstrecke.

Der Anschluß der Verbindungsleitung an die Schleifleitung, d.h. an die mit den Stromschienen der Schleifleitung korrespondierenden Stromabnehmer, erfolgt zweckmäßigerweise über einen am Stromabnehmerwagen abgehängten, um eine vertikale Achse drehbaren Schleifringkörper. Dieser Schleifringkörper stellt die volle Bewegungsfähigkeit des Transportfahrzeugs sicher und verhindert ein Verdrallen der Verbindungsleitung. Auch der für einen kontrollierten Abzug ebenso wie eine kontrollierte Rückspülung erforderliche, zu der Leitungstrommel koaxial angeordnete Führungsarm ist der Leitungstrommel gegenüber zweckmäßigerweise verschwenkbar. Vorteilhaft wird er in Aufwickelrichtung mittels hydraulischem Antrieb bewegt. Die Antriebssysteme von Leitungstrommel und Führungsarm wirken gegenläufig. Dabei wird die Verbindungsleitung unter Berücksichtigung der Fahrgeschwindigkeit des Fahrzeugs unter der erforderlichen Zugspannung gehalten und an das abgespulte Leitungsgewicht angepaßt.

Um zu verhindern, daß die Verbindungsleitung vollständig von der Trommel abgewickelt wird und erhöhte Reißgefahr besteht, ist nach einer weiteren Ausführungsform der Erfindung auf der Leitungstrommel im inneren Bereich der Wicklungsspirale ein elektrischer Endschalter angebracht. Seine Positionierung wird in solcher Weise vorgenomen, daß bei sich abwickelnder Leitung eine vorgewählte bestimmte Leitungslänge auf der Trommel verbleibt und für einen Bewegungsausgleich zur Verfügung steht, während das Fahrzeug durch den Endschalter automatisch abgeschaltet und stillgesetzt wird. Die Verbindungsleitung besitzt aufgrund ihres Durchmessers und des verwendeten Materials eine gewisse Steifigkeit. Diese kann zu Störungen führen, wenn das Fahrzeug sich der Schleifleitung bzw. dem Schleifringkörper auf einen sehr kleinen Abstand nähert. Um die Steifigkeit der Leitung in etwa auszugleichen, darf daher die freie Leitungslänge zwischen Führungsarm und Schleifringkörper nicht zu klein gewählt werden. Gemäß einer weiteren Ausführungsform der Erfindung ist daher auf der Leitungstrommel im äußeren Bereich der Wickelspirale eine Kombination mindestens zweier elektrischer Endschalter angebracht. Diese Schalter sind so positioniert, daß während des Aufwickelvorgangs bzw. gegen das Ende des Aufwickelvorgangs hin die kleinste mögliche freie Leitungslänge zwischen Führungsarm und Schleifringkörper nicht unterschritten werden kann und das Fahrzeug automatisch abgeschaltet und stillgesetzt wird. Schließlich ist an der Leitungstrommel gemäß der Erfindung noch ein Kupplungselement vorgesehen, um den Führungsarm an der Leitungstrommel arretieren und eine gemeinsame Bewegung und Einstellung beider Einrichtungen vornehmen zu können.

Die Stromzuführung für das Untertagefahrzeug der Erfindung erfolgt von der Schleifleitung über den Stromabnehmerwagen und die auf dem Fahrzeug befindliche Leitungstrommel zur Fahrzeugeinspeisung. Aus Sicherheitsgründen sind dabei z.B. folgende schaltungstechnische Maßnahmen installiert. Das Einschalten des Fahrmotors ist nur bei Neutralstellung des Fahrtrichtungshebels und nach dem Einschalten der Hilfsantriebe möglich. Ferner erfolgt bei Stillstand des Fahrmotors selbsttätig das Auflegen der Fahrzeugfeststellbremse und der Bremse der Leitungstrommel. Diese Maßnahme ist notwendig, damit das Fahrzeug bei Stromausfall oder aufgrund einer Notabschaltung sofort zum Stehen kommt, da der Elektromotor keinerlei Bremswirkung bewirkt. Wenn die Leitungstrommel bis zu einem einstellbaren Grenzwert abgetrommelt ist, erfolgt eine nicht zu übersehende optische Anzeige durch Blinkleuchten für den Fahrer. Entfernt sich der Fahrer trotzdem noch weiter von der Schleifleitung, erfolgt rechtzeitig die Abschaltung des Fahrmotors sowie das Auflegen der Bremsen. Das Fahrzeug besitzt ferner noch Einrichtungen zur selbsttätigen Überwachung des Isolationszustandes der Speiseleitung und der Bruchsicherung der Einzelleiter in der Speiseleitung, so daß Gefahren rechtzeitig vermieden werden können.

Geräte zur Überwachung des Isolationszustandes sind an sich bekannt und auch im Bergbau in Niederspannungsnetzen mit offenem Sternpunkt üblich. Diese Einrichtungen messen den Isolationswert zwischen dem Erdpotential und den einzelnen Strängen des Netzes. Ebenso sind Einrichtungen zur Überwachung der Bruchsicherheit eines Überwachungsleiters bekannt, der in Verbindungsleitungen eingelegt ist.

Die Erfindung ist nicht auf den Einsatz von Untertagefahrzeugen beschränkt, bei analogen Transportsituationen kann sie selbstverständlich auch übertage angewendet werden.

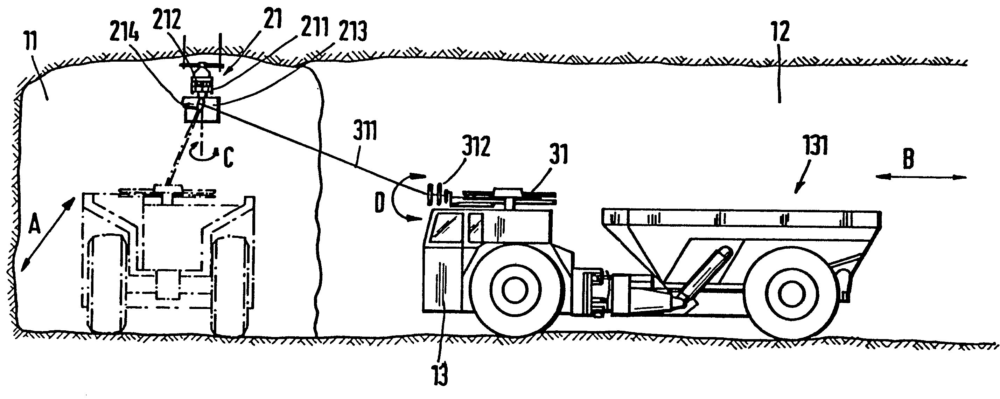

In der Zeichnung ist die Erfindung anhand eines in schematischer Weise dargestellten Ausführungsbeispieles näher und beispielhaft erläutert.

Dargestellt ist ein Untertagefahrzeug in der Förderstrecke 11, die sich in die Tiefe der Zeichnung hinein erstreckt, mit dem vor Kopf der Förderstrecke 11 befindlichen, seitlich über den Querschnitt der Förderstrecke 11 vorspringenden Abbauraum 12. Das im Abbauraum 12 gewonnene Material wird mit dem gleislosen Untertagefahrzeug 13, einem selbstfahrenden Muldenkipper, durch die Förderstrecke 11 abgefördert. Das Fahrzeug 13 muss also sowohl zum Querverkehr im Abbauraum 12 im Sinne des Doppelpfeiles B als auch zum Längsverkehr in der Förderstrecke 11 im Sinne des Doppelpfeiles A befähigt sein.

Für die Versorgung des elektromotorisch angetriebenen Untertagefahrzeugs 13 mit elektrischer Energie ist einerseits eine sich über die Länge der Förderstrecke 11 erstreckende, abgehängte Schleifleitung 21 vorgesehen, der eine Fahrbahn 211 zugeordnet ist, auf der eine Stromabnehmervorrichtung bzw. -wagen 212 verfährt. Sein Stromabnehmer steht in Wirkeingriff mit den Stromschienen der Schleifleitung und führt den Stromkontakt herbei. Der Stromabnehmerwagen 212 geht in einen Schleifringkörper 213 über, von dem andererseits eine zugfeste, zum Fahrzeug 13 führende Leitung 311 ausgeht, die als von einer dem Fahrzeug 13 zugeordneten Leitungstrommel 31 abziehbare Verbindungsleitung ausgebildet ist.

Auf die Leitungstrommel 31 wirkt eine einstellbare Rückstellkraft ein, der bei der Längsfahrt des Fahrzeugs 13 im Sinne des Doppelpfeiles A ein Wert vorgegeben wird, der das Mitnehmen des Stromabnehmerwagens 212 beim Verfahren des Fahrzeugs 13 sicherstellt. Bei der Querfahrt im Sinne des Doppelpfeiles B ermöglicht ein variierbarer Wert einerseits das Abziehen der Leitung 311 von der Leitungstrommel 31 bei der Entfernung des Fahrzeugs 13 vom Schleifleitungssystem und andererseits stellt er sicher, daß die abgezogene Leitung 311 nicht durchhängt.

Bei der Längsfahrt im Sinne des Doppelpfeiles A, also beim Verfahren des Fahrzeugs 13 in der Förderstrecke 11 bewirkt der dem Stromabnehmerwagen 212 zugeordnete Schleifringkörper 213, daß der Anschluß der Leitung 311 sich in beiden Fahrtrichtungen (Langstreckenfahrt und Fahrt zum Abbauraum) in Zugrichtung orientiert (Doppelpfeil C). Er ermöglicht des weiteren eine Orientierung auf die jeweilige Fahrtrichtung des Fahrzeugs 13 beim Einschwenken des Fahrzeugs 13 aus der Förderstrecke 11 in den Abbauraum 12 sowie beim Querverkehr des Fahrzeugs im Sinne des Doppelpfeiles B im Abbauraum 12.

Der Leitungsführung dienen sowohl ein dem Schleifringkörper 213 vorgelagerter Trichter 214 als auch ein zu der Leitungstrommel 31 koaxial angeordneter Führungsarm 312, welcher der Leitungstrommel 31 gegenüber zweckmäßigerweise in horizontaler Ebene verschwenkbar ist (Doppelpfeil D).

Zwischen Leitungstrommel 31 und Zuleitung zum im Fahrzeug 13 befindlichen Elektromotor befindet sich in bekannter Weise selbstverständlich ebenfalls ein Schleifringkörper. Dieser ist an der vertikalen Achse der Trommel angebracht.

Die Vorteile des Untertagefahrzeugs der Erfindung sind darin zu sehen, daß mit einem derartigen Fahrzeug praktisch unbegrenzte Fahrstrecken mit großer Aktionsbreite befahren werden können bei sehr niedrigen Bauhöhen über dem Fahrzeug. Ferner bestehen freie Fahrmöglichkeiten über den gesamten Fahrbereich, ohne daß es zu Verdrillungen oder ähnlichen Beeinträchtigungen der elektrischen Speiseleitung kommt.

**Patentansprüche**

1. Gleisloses, knickgelenktes Untertagefahrzeug (13) mit Elektromotorantrieb des Zugteils, dessen Energiezufuhr über eine Schleifleitung (21) und eine daran fahrbare Stromabnehmervorrichtung (212) sowie über eine an letztere elektrisch und kraftschlüssig angeschlossene und gegen Rückstellkraft von einer Trommel (31) abziehbare Verbindungsleitung (311) erfolgt, gekennzeichnet durch die Kombination folgender Merkmale:

a) die Verbindungsleitung (Speiseleitung) (311) ist über einen um eine vertikale Achse drehbaren Schleifringkörper (213) an die Stromabnehmervorrichtung (212) angeschlossen;

b) eine mit Hydraulikmotor angetriebene, spiralig wickelnde Leitungstrommel (31) ist um eine vertikale Achse drehbar auf dem Zugteil angebracht, wobei die Achse mit einem Schleifringkörper ausgerüstet ist;

c) ein hydraulisch verschwenkbarer Führungsarm (312) ist koaxial zur Leitungstrommel (31) angeordnet;

d) hydrostatische Axialkolbengetriebe für Fahrantrieb und Antrieb gemäss b) und c) sind mit einem Drehstrommotor gekoppelt.

2. Untertagefahrzeug nach Anspruch 1, gekennzeichnet durch einen Trennschalter an der Stromabnehmervorrichtung für die Verbindungsleitung (311).

3. Untertagefahrzeug nach den Ansprüchen 1 und 2, gekennzeichnet durch eine Leitungstrommel (31) mit einstellbarem Leitungszug.

4. Untertagefahrzeug nach den Ansprüchen 1 bis 3, gekennzeichnet durch eine Leitungstrommel (31) mit sich in Abhängigkeit von dem abgespulten Leitungsgewicht änderndem Leitungszug.

5. Untertagefahrzeug nach den Ansprüchen 1 bis 4, gekennzeichnet durch gegenläufige Antriebssysteme von Leitungstrommel (31) und Führungsarm (312).

6. Untertagefahrzeug nach den Ansprüchen 1 bis 5, dadurch gekennzeichnet, daß auf der Leitungstrommel (31) im inneren Bereich der Wicklungsspirale ein elektrischer Endschalter mit der Maßgabe positioniert ist, daß eine Abschaltung (Stillsetzung) des Fahrzeugs (13) bei vorgegebener Restwicklung erfolgt.

7. Untertagefahrzeug nach den Ansprüchen 1 bis 6, dadurch gekennzeichnet, daß auf der Leitungstrommel (31) im äußeren Bereich der Wicklungsspirale eine Kombination mindestens zweier elektrischer Endschalter mit der Maßgabe positioniert ist, daß eine Abschaltung (Stillsetzung) des Fahrzeugs (13) bei der kleinsten möglichen freien Leitungslänge zwischen Führungsarm (312) und Schleifringkörper (213) erfolgt.

8. Untertagefahrzeug nach den Ansprüchen 1 bis 7, dadurch gekennzeichnet, daß die Leitungstrommel (31) ein Kupplungselement zur Arretierung des Führungsarms (312) an der Leitungstrommel (31) aufweist.

## Claims

1. Trackless, centre pivot-steered underground vehicle (13) with electric-motor drive of the tractor section, the supply of energy to which takes place via a sliding contact line (21) and a current-collecting device (212) which can be driven thereon, and via a connecting cable (311) which is connected eletrically and mechanically to the latter and can be unwound from a reel (31) against a restoring force, characerised by the combination of the following features:

a) the connecting cable (supply cable) (311) is connected to the current-collecting device (212) via a slip-ring member (213) which can be rotated about a vertical axle;

b) a cable reel (31) which winds in a spiral and is driven by a hydraulic motor is mounted on the tractor section so as to be rotatable about a vertical axle, the axle being equipped with a slip-ring member;

c) a hydraulically pivotable guide arm (312) is arranged coaxially to the cable reel (31);

d) a hydrostatic axial piston transmission for the travelling mechanism and drive in b) and c) is coupled to a three phase current motor.

2. Underground vehicle according to Claim 1, characterised by a disconnecting switch on the current-collecting device for the connecting cable (311).

3. Underground vehicle according to Claims 1 and 2, characterised by a cable reel (31) with adjustable tension on the cable.

4. Underground vehicle according to Claims 1 to 3, characterised by a cable reel (31) with a tension on the cable which varies dependent on the weight of cable already unwound.

5. Underground vehicle according to Claims 1 to 4, characterised by drive means for the cable reel (31) and guide arm (312) operating in opposite directions.

6. Underground vehicle according to Claims 1 to 5, characterised in that an electric limit switch is positioned on the cable reel (31) in the inner area of the coil, so that de-energisation (stopping) of the vehicle (13) takes place when a predetermined length of cable still remains wound up.

7. Underground vehicle according to Claims 1 to 6, characterised in that a combination of at least two electric limit switches is positioned on the cable reel (31) in the outer area of the coil so that de-energisation (stopping) of the vehicle (13) takes place at the shortest possible free length of line between the guide arm (312) and the slip-ring member (213).

8. Underground vehicle according to Claims 1 to 7, characterised in that the cable reel (31) has a coupling element to lock the guide arm (312) on the cable reel (31).

## Revendications

1. Véhicule souterrain articulé (13) non assujetti à circuler sur des rails et dont l'élément tracteur est entraîné par un dispositif d'entraînement à moteur électrique, dont l'alimentation en énergie est réalisée par l'intermédiaire d'une ligne de contact (21) et d'un dispositif de prélèvement de courant (212) ainsi que par l'intermédiaire d'une ligne de liaison (311) raccordée électriquement et selon une liaison de force au dispositif de prélèvement de courant et pouvant être déroulée d'un tambour (31) à l'encontre d'une force de rappel, remarquable par la combinaison des caractéristiques suivantes:

a) la ligne de liaison (ligne d'alimentation) (311) est raccordée au dispositif de prélèvement de courant (212) par l'intermédiaire d'un corps en forme de bague coulissante (213) pouvant tourner autour d'un axe vertical;

b) un tambour (31) d'enroulement de la ligne, qui est entraîné par un moteur hydraulique et réalise un enroulement en spirale, est monté sur l'élément tracteur de manière à pouvoir tourner autour d'un axe vertical, qui est équipé d'un corps en forme de bague coulissante;

c) un bras de guidage (312), qui peut pivoter sous l'action d'une commande hydraulique, est disposé coaxialement avec le tambour (31) d'enroulement de la ligne;

d) des mécanismes hydrostatiques à pistons axiaux pour l'entraînement de déplacement et pour l'entraînement conformément à b) et c) sont accouplés à un moteur à courant triphasé.

2. Véhicule souterrain suivant la revendication 1, caractérisé par un sectionneur monté sur le dispositif de prélèvement de courant pour la ligne de liaison (311).

3. Véhicule souterrain suivant les revendications 1 et 2, caractérisé par un tambour (31) d'enroulement de la ligne, dans lequel la traction de la ligne est réglable.

4. Véhicule souterrain suivant les revendications 1 à 3, caractérisé par un tambour (31) d'enroulement de la ligne, dans lequel la traction de la ligne peut être modifiée en fonction du poids de la ligne déroulée.

5. Véhicule souterrain suivant les revendications 1 à 4, caractérisé par des systèmes d'entraînement antagonistes pour le tambour (31) d'enroulement de la ligne et le bras de guidage (312).

6. Véhicule souterrain suivant les revendications 1 à 5, caractérisé par le fait qu'un interrupteur électrique de fin de course est disposé sur le tambour (31) d'enroulement de la ligne, à l'intérieur de la spirale d'enroulement de manière à réaliser une déconnexion (mise à l'arrêt) du véhicule (13), pour un enroulement restant prédéterminé.

7. Véhicule souterrain selon les revendications 1 à 6, caractérisé en ce qu'un ensemble combiné comprenant au moins deux interrupteurs électriques de fin de course est disposé sur le tambour (31) d'enroulement de la ligne, dans la partie située à l'extérieur de la spirale d'enroulement, de manière à réaliser une déconnexion (mise à l'arrêt) du véhicule (13) pour la plus petite longueur libre possible de la ligne entre le bras de guidage (312) et le corps en forme de bague coulissante (213).

8. Véhicule souterrain suivant les revendications 1 à 7, caractérisé par le fait que le tambour (31) d'enroulement de la ligne comporte un élément d'accouplement servant à bloquer le bras de guidage (312) sur ce tambour.